Europäisches Patentamt

European Patent Office

Office européen des brevets

(11) Veröffentlichungsnummer : **0 164 513**
**B1**

(12) **EUROPÄISCHE PATENTSCHRIFT**

(45) Veröffentlichungstag der Patentschrift :
20.01.88

(51) Int. Cl.⁴ : **C 08 L 69/00, C 08 L 51/00**

(21) Anmeldenummer : **85103937.0**

(22) Anmeldetag : **01.04.85**

(54) **Thermoplastische Formmassen.**

(30) Priorität : **14.04.84 DE 3414118**

(43) Veröffentlichungstag der Anmeldung :
**18.12.85 Patentblatt 85/51**

(45) Bekanntmachung des Hinweises auf die Patenterteilung : **20.01.88 Patentblatt 88/03**

(84) Benannte Vertragsstaaten :
**BE DE FR GB NL**

(56) Entgegenhaltungen :
**EP-A- 0 111 260**
**EP-A- 0 121 662**
**EP-A- 0 132 339**
**FR-A- 2 354 370**

(73) Patentinhaber : **BASF Aktiengesellschaft**
**Carl-Bosch-Strasse 38**
**D-6700 Ludwigshafen (DE)**

(72) Erfinder : **Mitulla, Konrad, Dr.**
**An der Froschlache 23**
**D-6700 Ludwigshafen (DE)**
Erfinder : **Hambrecht, Juergen, Dr.**
**Werderstrasse 30**
**D-6900 Heidelberg (DE)**
Erfinder : **Echte, Aldolf, Dr.**
**Leuschnerstrasse 42**
**D-6700 Ludwigshafen (DE)**
Erfinder : **Swoboda, Johann, Dr.**
**Neuwiesenstrasse 28**
**D-6700 Ludwigshafen (DE)**
Erfinder : **Siebel, Peter, Dr.**
**Trifelsring 20**
**D-6703 Limburgerhof (DE)**
Erfinder : **Schwaab, Josef, Dr.**
**Rieslingweg 8**
**D-6735 Maikammer (DE)**
Erfinder : **Frank, Herbert**
**Schillerstrasse 12**
**D-6714 Weisenheim (DE)**

Jouve, 18, rue St-Denis, 75001 Paris, France

**0 164 513**

**Beschreibung**

Die Erfindung betrifft thermoplastische Formmassen auf der Grundlage von Styrol- und Acrylnitril enthaltenden, mit Acrylester schlagzäh modifizierten Polymerisaten und Polycarbonaten.

Zum Stand der Technik nennen wir:

(1) DE-B 11 70 141
(2) DE-B 18 10 993
(3) DE-A 20 37 419
(4) DE-B 22 59 564
(5) DE-A 31 49 358
(6) DE-A 32 10 284 und
(7) EP-A 111 260 (Stand der Technik gemäß Artikel 54(3) EPÜ)

Mischungen von Styrol und Acrylnitril enthaltenden schlagzähen Polymerisaten mit Polycarbonaten sind in (1) und (2) beschrieben. Diese bekannten Formmassen besitzen im allgemeinen zufriedenstellende Eigenschaften. Häufig wird aber eine höhere Zähigkeit, eine höhere Wärmeformbeständigkeit, vor allem aber eine verbesserte Witterungsbeständigkeit angestrebt. In (3), (4) und (6) werden deshalb zur Verbesserung der Beständigkeit gegen Licht und Wärme Formmassen beschrieben, die aus Polycarbonaten und ASA-Polymerisaten aufgebaut sind. Die 2-stufige Pfropfung von ASA-Polymerisaten ist in (5) beschrieben. In (7) schließlich ist eine Abmischung aus Polycarbonaten und ASA beschrieben, wobei die Pfropfhülle des Mischpolymerisates 2-stufig aufgebaut ist. Häufig genügt bei diesen Formmassen die Zähigkeit und Wärmeformbeständigkeit nicht den ständig steigenden Ansprüchen, insbesondere aber ist die Verarbeitbarkeit und die multiaxiale Schlagzähigkeit der Formmassen völlig unbefriedigend.

Aufgabe der vorliegenden Erfindung war es deshalb, Formmassen auf Basis von Polymermischungen, bestehend aus Polycarbonat und Acrylsäureesterpfropfmischpolymerisaten zu entwickeln, die diese Nachteile nicht aufweisen. Insbesondere sollte das Verarbeitungsverhalten im Spritzguß und die Festigkeit bei der multiaxialen Schlagbeanspruchung im Fallrohrtest nach DIN 53443 erhöht werden.

Diese Aufgabe wird durch die im Patentanspruch 1 beschriebene Formmasse gelöst.

Die Erfindung betrifft daher eine thermoplastische Formmasse, enthaltend

A) 10 bis 90 Gew.-%, bezogen auf A) + B), mindestens eines Polycarbonates und

B) 90 bis 10 Gew.-%, bezogen auf A) + B), wobei einander A) und B) auf 100 Gew.% ergänzen, mindestens eines Pfropfmischpolymerisates, das gebildet wird aus

$b_1$) mindestens einem Elastomeren (Kautschuk), mit einer Einfriertemperatur unter 0 °C, einer Teilchengröße von 200 bis 700 nm ($d_{50}$-Wert) und einer Verteilung $Q = (d_{90}-d_{10})/D_{50} < 0,5$, das 10 bis 80 Gew.%, bezogen auf B), ausmacht und das aufgebaut ist aus (Summe $b_1a_1 + b_1a_2 + b_1a_3 = 100$):

$b_1a_1$) 50 bis 99,9 Gew.%, bezogen auf $b_1$), mindestens eines Alkylacrylats mit 1 bis 8 Kohlenstoffatomen im Alkylrest,

$b_1a_2$) gegebenenfalls mindestens einem copolymerisierbaren ungesättigten Monomeren und

$b_1a_3$) 0,1 bis 5 Gew.%, bezogen auf $b_1$), eines copolymerisierbaren polyfunktionellen, vernetzenden Monomeren und

$b_2$) einer Pfropfhülle auf dieses Elastomere, die 90 bis 20 Gew.%, bezogen auf B), ausmacht,

wobei die Pfropfhülle $b_2$) des Mischpolymerisats B dreistufig aufgebaut ist und einpolymerisiert enthält als Pfropfmonomere der ersten Stufe

$b_2a_1$) 5 bis 40 Gew.% bezogen auf $b_2$), mindestens eines monoethylenisch ungesättigten aromatischen Kohlenwasserstoffs mit bis zu 12 Kohlenstoffatomen als Pfropfmonomere der zweiten Stufe

$b_2a_2$) 15 bis 50 Gew.%, bezogen auf $b_2$), eines Gemisches aus mindestens einem monoethylenisch ungesättigten aromatischen Kohlenwasserstoff mit bis zu 12 Kohlenstoffatomen und mindestens einem damit copolymerisierbaren ethylenisch ungesättigten Monomeren im Gewichtsverhältnis von 90 : 10 bis 60 : 40, und als Pfropfmonomere der dritten Stufe

$b_2a_3$) 10 bis 80 Gew.%, bezogen auf $b_2$), eines Alkylmethacrylates oder eines Alkylacrylates mit 1 bis 8 C-Atomen im Alkylrest oder deren Mischungen, wobei das aus dem Elastomeren $b_1$) und der Pfropfhülle $b_2$) gebildete Pfropfmischpolymerisat eine mittlere Teilchengröße von 200 bis 700 nm ($d_{50}$-Wert der integralen Masseverteilung) aufweist.

Nachstehend wird der Aufbau der Formmasse aus den Komponenten A) bis C) beschrieben:

Die erfindungsgemäße Formmasse enthält die Komponenten A) und B) jeweils in einem Anteil von 10

2

bis 90 Gew.%, vorzugsweise von 20 bis 80 Gew.%, jeweils bezogen auf A) + B), wobei sich beide Komponenten zu 100 ergänzen. Vorzugsweise besteht die Formmasse aus den Komponenten A) und B) in den genannten Anteilen.

Ferner kann die Formmasse übliche Zusatzstoffe C) aufweisen, die in üblichen Mengen, vorzugsweise im Bereich von 0,1 bis 30 Gew.%, bezogen auf A) + B), angewendet werden.

Die Komponente B) der Formmasse besteht aus mindestens einem Pfropfmischpolymerisat, das aus mindestens einem Elastomeren $b_1$) in einem Anteil von 10 bis 80 Gew.%, vorzugsweise von 30 bis 70 Gew.% und insbesondere von 40 bis 65 Gew.%, jeweils bezogen auf B), aufgebaut ist.

Ferner enthält das Pfropfmischpolymerisat mindestens eine Pfropfhülle $b_2$) in einem Anteil von 90 bis 20 Gew.%, vorzugsweise von 70 bis 30 Gew.% und insbesondere von 60 bis 35 Gew.%, jeweils bezogen auf B).

Komponente A)

Unter Polycarbonaten A) im Sinne der erfindungsgemäßen Formmasse sollen Polycarbonate auf der Basis von Homopolycarbonaten und Copolycarbonaten verstanden werden. Als Bisphenole kommen dabei beispielsweise in Frage : Dihydroxydiphenyle, Bis-(hydroxyphenyl) alkane, Bis-(hydroxyphenyl) ether. Es können aber auch alle anderen, für die Herstellung von Polycarbonaten geeigneten Bisphenole eingesetzt werden, wie sie u. a. in der Monographie H. Schnell, Chemistry and Physics of Polycarbonates, Interscience Publishers, New York, 1964, in der US-A 2 999 835 und in der DE-A 22 48 817 beschrieben sind. Besonders bevorzugt sind Polycarbonate auf der Basis von 2,2-Bis-(4-hydroxyphenyl) propan. Die Synthese der Polycarbonate wird beispielsweise in der US-A 2 999 835 und der GB-A 7 72 627 beschrieben. Die Komponente A weist relative Viskositäten $\eta_{spec}/c$ im Bereich von 1,1 bis 1,5 [ml/g] auf, entsprechend mittleren Molgewichten $\bar{M}_\eta$ im Bereich von 25.000 bis 200.000.

Komponente B)

Die Komponente B) stellt mindestens ein Pfropfmischpolymerisat (Weichkomponente) dar ; es ist aus insgesamt 2 Teilen aufgebaut bzw. besteht aus diesen.

Diese sind :

$b_1$) ein Elastomeres (Kautschuk), das in einem Anteil von 10 bis 80 Gew.%, vorzugsweise von 30 bis 70 Gew.% und insbesondere von 40 bis 65 Gew.%, jeweils bezogen auf B), vorhanden ist und eine Einfriertemperatur von weniger als 0 °C, vorzugsweise von weniger als — 30 °C, aufweist, und

$b_2$) eine durch sukzessive Polymerisation in 3 Verfahrensschritten auf das Elastomere gepfropfte Hülle, die 20 bis 90 Gew.%, vorzugsweise 30 bis 70 Gew.%, insbesondere 60 bis 35 Gew.%, jeweils bezogen auf B) ausmacht.

Als Monomere für die Herstellung des Elastomeren kommen in Betracht (Summe $b_1a_1$) + $b_1a_2$) + $b_1a_3$) = 100) :

$b_1a_1$) 50 bis 99,9 Gew.%, vorzugsweise 70 bis 99 Gew.%, insbesondere 95 bis 99 Gew.%, bezogen auf $b_1$), mindestens eines Alkylacrylates mit 1 bis 8 C-Atomen im Alkylrest, vorzugsweise werden n-Butylacrylat und/oder 2-Ethyl-hexylacrylat einpolymerisiert.

$b_1a_2$) Gegebenenfalls kann das elastomere Polymerisat $b_1$) auch noch ein weiteres copolymerisierbares Monomer, wie Butadien, Isopren, Styrol, Acrylnitril, oder Vinylmethylether oder Mischungen davon einpolymerisiert enthalten, insbesondere 10 bis 20 Gew.% bezogen auf $b_1$).

$b_1a_3$) Um vernetzte Acrylsäureester-Polymerisate zu erhalten, wird die Polymerisation der Acrylsäureester in Gegenwart von 0,1 bis 5 Gew.%, vorzugsweise von 1 bis 4 Gew.%, bezogen auf die bei der Herstellung der Pfropfgrundlage eingesetzten gesamten Monomeren, eines copolymerisierbaren, polyfunktionellen, vorzugsweise bifunktionellen, die Vernetzung bewirkenden Monomeren $b_1a_3$) durchgeführt. Als solche bi- oder polyfunktionellen Vernetzungs-Monomeren $b_1a_3$) eignen sich Monomere, die vorzugsweise zwei, gegebenenfalls auch mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat oder Diallylphthalat. Als besonders günstiges Vernetzungsmonomeres hat sich der Acrylsäureester des Tricyclodecenylalkohols erwiesen (vgl. DE-B 12 60 135).

Besonders bevorzugt werden Elastomere $b_1$), die nur die Monomeren $b_1a_1$) und $b_1a_3$) in den vorstehend genannten Bereichen einpolymerisiert enthalten.

Das Elastomere $b_1$) stellt somit ein vernetztes Homopolymerisat oder ein Copolymerisat von Acrylestern dar.

Die Herstellung der einzusetzenden Weichkomponente ($b_1$ + $b_2$) ist an sich bekannt und kann beispielsweise nach der in der DE-B 12 60 135 beschriebenen Methode erfolgen.

3

Herstellung des Elastomeren b₁)

Das Elastomer, die Pfropfgrundlage b₁), wird hergestellt, indem der oder die Acrylsäureester (b₁a₂) und das polyfunktionelle, die Vernetzung bewirkende Monomere b₁a₃), gegebenenfalls zusammen mit den weiteren Comonomeren b₁a₂), in wäßriger Emulsion in an sich bekannter Weise bei Temperaturen von 20 bis 100 °C, vorzugsweise von 50 bis 80 °C polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.%, insbesondere von 1 bis 2 Gew.%, bezogen auf die bei der Herstellung der Pfropfgrundlage (b₁) eingesetzten Monomeren, einzusetzen. Im allgemeinen wird bei einem Wasser- zu Monomeren-Verhältnis von 2 : 1 bis 0,7 : 1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.%, bezogen auf die bei der Herstellung der Pfropfgrundlage (b₁) eingesetzten Monomeren, eingesetzt. Als weitere Polymerisationshilfsstoffe können die üblichen Puffersubstanzen, durch welche pH-Werte von vorzugsweise 6 bis 9 eingestellt werden — z. B. Natriumbicarbonat und Natriumpyrophosphat — sowie 0 bis 3 Gew.% eines Molekulargewichtsreglers — wie Mercaptane, Terpinole oder dimeres α-Methylstyrol — bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, daß der erhaltene Latex des vernetzten Acrylsäure-ester-Polymerisats einen $d_{50}$-Wert im Bereich von etwa 200 bis 700 nm, vorzugsweise im Bereich von 250 bis 600 nm besitzt. Die Teilchengrößen-Verteilung des Latex soll dabei vorzugsweise eng sein. Der Quotient $Q = (d_{90}-d_{10})/d_{50}$ soll kleiner als 0,5, vorzugsweise kleiner als 0,35, sein.

Herstellung der Pfropfhülle b₂)

Die Pfropfhülle, Komponente b₂), wird in insgesamt 3 sukzessiven Verfahrensstufen, in denen in der genannten Reihenfolge die Monomeren b₂a₁), dann b₂a₂) und schließlich b₂a₃) an das Elastomere an- oder aufpolymerisiert werden, hergestellt. Die Summe der einpolymerisierten Monomeren b₂a₁) + b₂a₂) + b₂a₃) beträgt 100. Die 1. Stufe macht 5 bis 40 Gew.%, vorzugsweise 10 bis 25 Gew.%, bezogen auf b₂), aus. Zu ihrer Herstellung werden nur ethylenisch-ungesättigte aromatische Kohlenwasserstoffe mit bis zu 12 C-Atomen b₂a₁) verwendet.

Die 2. Stufe der Pfropfhülle macht 15 bis 50 Gew.%, insbesondere 20 bis 45 Gew.%, jeweils bezogen auf b₂), aus. Zu ihrer Herstellung werden Mischungen aus den unter b₂a₁ genannten aromatischen Kohlenwasserstoffen und damit copolymerisierbaren ethylenisch ungesättigten Monomeren im Gewichtsverhältnis von 90 : 10 bis 60 : 40, insbesondere von 80 : 20 bis 70 : 30 angewendet.

Die dritte Stufe der Pfropfhülle macht 10 bis 80 Gew.%, vorzugsweise 25 bis 70 Gew.%, jeweils bezogen auf b₂), aus. Zu ihrer Herstellung wird mindestens 1 Monomeres b₂a₃) aus der Gruppe der Alkylmethacrylate oder der Alkylacrylate mit jeweils 1 bis 8 C-Atomen im Alkylrest einpolymerisiert.

Zur Herstellung der Pfropfhülle b₂) und damit der Weichkomponente (b₁ + b₂) wird in Gegenwart des Latex des vernetzten Acrylester-Polymerisats b₁) zuerst mindestens ein vinylaromatisches Monomeres b₂a₁) mit bis zu 12 Kohlenstoffatomen (ein-) bzw. aufpolymerisiert. Beispiele für solche Monomere sind Styrol, α-Methylstyrol und kernalkylierte Styrole, wie p-Methylstyrol und tert.-Butylstyrol. Besonders bevorzugt werden Styrol, α-Methylstyrol und p-Methylstyrol eingesetzt. Es ist vorteilhaft, diese Pfropfmischpolymerisation von z. B. Styrol b₂a₁) auf das als Pfropfgrundlage dienende vernetzte Polyacrylsäureester-Polymerisat b₁) in wäßriger Emulsion unter den üblichen, vorstehend aufgeführten Bedingungen bis zum praktisch vollständigen Verbrauch der Monomeren b₂a₁) durchzuführen. Die Pfropfmischpolymerisation kann zweckmäßig im gleichen System erfolgen wie die Emulsionspolymerisation zur Herstellung der Pfropfgrundlage b₁), wobei, falls notwendig, weiterer Emulgator und Initiator zugegeben werden kann. Das aufzupropfende vinylaromatische Monomere, insbesondere Styrol, kann dem Reaktionsgemisch auf einmal, absatzweise in mehreren Stufen oder vorzugsweise kontinuierlich während der Polymerisation zugegeben werden. Die Pfropfmischpolymerisation des Styrols in Gegenwart des vernetzten Acrylsäureester-Polymerisats wird so geführt, daß ein Pfropfgrad von 5 bis 40, vorzugsweise von 10 bis 25, im Pfropfmischpolymerisat (b₁ + b₂a₁) resultiert.

In einer zweiten Verfahrensstufe wird dann die Pfropfmischpolymerisation mit einem Monomerengemisch b₂a₂) aus einem vinylaromatischen Monomeren und einem copolymerisierbaren polaren Monomeren wieder bis zum praktisch vollständigen Umsatz durchgeführt. Dabei werden bevorzugt die bereits bei der ersten Pfropfstufe eingesetzten Monomeren, insbesondere Styrol, α-Methylstyrol und p-Methylstyrol verwendet. Beispiele für copolymerisierbare, ethylenisch ungesättigte Monomere sind Acrylnitril, Acrylamid und/oder Vinylmethylether. Besonders bevorzugt wird Acrylnitril. Als besonders bevorzugte Monomeren-Gemische werden vor allem α-Methylstyrol und/oder Styrol und Acrylnitril eingesetzt. Auch der zweite Schritt der Pfropfmischpolymerisation wird zweckmäßigerweise im gleichen Emulsions-

4

System durchgeführt, dabei kann, falls notwendig, weiterer Emulgator und Initiator zugegeben werden. Das aufzupfropfende Monomeren-Gemisch, bevorzugt wird eine Mischung aus Stryrol und Acrylnitril, kann dem Reaktionsgemisch auf einmal, absatzweise in mehreren Stufen oder vorzugsweise kontinuierlich während der Polymerisation zugegeben werden. Die Pfropfmischpolymerisation des Gemischs von Styrol und Acrylnitril in Gegenwart des vernetzten Acrylsäureester-Polymerisats wird so ausgeführt, daß ein Pfropfgrad von 15 bis 50, vorzugsweise von 20 bis 45, im Pfropfmischpolymerisat $(b_1 + b_2a_1 + b_2a_2)$ resultiert.

In der 3. Verfahrensstufe werden, vorzugsweise mit dem Emulgator- und Initiatorsystem, das in der vorangegangenen Verfahrensstufe verwendet wurde, die Monomeren $b_2a_3)$ ein- bzw. aufpolymerisiert. Vorzugsweise werden die Ester der Methacrylsäure, wie Methylmethacrylat, Ethylmethacrylat oder t-Butylmethacrylat angewendet. Besonders bevorzugt ist das Methylmethacrylat.

Die Verfahrensmaßnahmen entsprechen im allgemeinen den Bedingungen der 1. und 2. Verfahrensstufe mit dem Unterschied, daß die Pfropfgrade im Bereich von 5 bis 40, vorzugsweise 10 bis 30 eingestellt werden.

Unter Pfropfgrad im Sinne der vorliegenden Erfindung ist dabei das Verhältnis der Pfropfmonomeren zu dem Pfropfmischpolymerisat, d. h. $b_2/b_1 + b_2 \cdot 100$ zu verstehen,
d. h. z. B.
für die 1. Stufe $b_2a_1/b_1 + b_2a_1 \cdot 100$
für die 2. Stufe $b_2a_2/b_1 + b_2a_1 + b_2a_2 \cdot 100$ usw.

Anzumerken ist, daß der Pfropfgrad insbesondere bei schichtweisem Aufbau nur während der Herstellung des Pfropfmischpolymerisates bestimmt (eingestellt) werden kann.

Die Pfropfmischpolymerisate $(b_1 + b_2)$ weisen mittlere Teilchengrößen von 200 bis 700 nm $(d_{50}$-Wert) auf. Die Bedingungen bei der Herstellung des Elastomeren $b_1)$ sind daher so zu wählen, daß Teilchengrößen in diesem Bereich resultieren. Maßnahmen hierzu sind bekannt und z. B. in der DE-PS 12 60 135 und der DE-OS 28 26 925 sowie in Journal of Applied Polymer Science, Vol. 9 (1965), S. 2929 bis 2938 beschrieben. Die Teilchenvergrößerung, des Latex des Elastomeren kann z. B. mittels Agglomeration bewerkstelligt werden.

Zu der Weichkomponente B zählen auch die bei der Pfropfmischpolymerisation zur Herstellung der Komponente $b_2)$ entstehenden freien, nicht gepfropften $b_2a_1)$-, $b_2a_2)$- und $b_2a_3)$-enthaltenden Homo- und Copolymerisate. Je nach den bei der Pfropfmischpolymerisation für die Herstellung des Pfropfmischpolymerisats $(b_1 + b_2)$ gewählten Bedingungen kann es möglich sein, daß bei der Pfropfmischpolymerisation ein geringer Anteil an solchen (Co)polymerisaten gebildet wird.

Komponente C)

Der erfindungsgemäßen Formmasse können für bestimmte Zwecke, zusätzlich zu den Komponenten A + B, Copolymerisate der Art, wie sie bei der Pfropfmischpolymerisation entstehen, zugegeben werden. Das heißt, die Verdünnung der Hartmatrix A der erfindungsgemäßen Formmasse kann der Fachmann mit geeigneten verträglichen Copolymerisaten ohne erfinderisches Zutun vornehmen.

Die erfindungsgemäßen Formmassen können ferner weitere Zusatzstoffe enthalten. Als solche Zusatzstoffe seien beispielsweise genannt : Füllstoffe, Farbstoffe, Pigmente, Antistatika, Antioxidantien, Flammschutzmittel und Schmiermittel. Die Zusatzstoffe werden in üblichen Mengen, vorzugsweise in Mengen von 0,1 bis zu insgesamt etwa 30 Gew.%, bezogen auf A) + B), eingesetzt.

Herstellung der Formmasse

Das Mischen der Komponenten A), B) und gegebenenfalls C) der erfindungsgemäßen Formmasse kann nach allen bekannten Methoden erfolgen. Vorzugsweise geschieht jedoch das Mischen der Komponenten A), B) und C) durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation [Komponente (B)] können aber auch teilweise entwässert oder direkt als Dispersion mit dem Polycarbonat A), und der Komponente C), vermischt werden, wobei dann während des Vermischens die vollständige Trocknung des Pfropfmischpolymerisats erfolgt.

Die Herstellung der Formmassen gemäß Erfindung erfolgt z. B. dadurch, daß eine Schmelze des Polycarbonats [Komponente A)] mit dem Pfropfmischpolymerisat $(b_1 + b_2)$ bei Temperaturen über 200 °C intensiv vermischt wird. Sie kann auch dadurch erfolgen, daß man eine Schmelze der Polymerisate A) mit einem gefällten Pfropfmischpolymerisat $(b_1 + b_2)$, das einen Restwassergehalt von 10 bis 40 Gew.% aufweist, bei Temperaturen über 180 °C intensiv vermischt, oder daß man die Schmelze mit einer Dispersion des Pfropfkautschuks $(b_1 + b_2)$, die einen Feststoffgehalt von 40 bis 70 Gew.% aufweist, bei Temperaturen über 180 °C intensiv vermischt.

Die erfindungsgemäße Formmasse kann nach den bekannten Verfahren der Thermoplastverarbeitung bearbeitet werden, also z. B. durch Extrudieren, Spritzgießen, Kalandrieren, Hohlkörperblasen, Pressen oder Sintern ; besonders bevorzugt werden aus den erfindungsgemäßen Formmassen Formteile durch Spritzgießen für den Automobilbau hergestellt.

Es hat sich überraschenderweise gezeigt, daß die erfindungsgemäße Formmasse zusätzlich zu guten Verarbeitungseigenschaften ausgezeichnete Kerbschlagzähigkeiten und eine gute Festigkeit bei der multiaxialen Schlagbeanspruchung (Fallrohrtest) aufweist.

Es zeigt sich auch, daß die Schlagzähigkeit nach Bewitterung auf einem hohen Endniveau verbleibt und die Formmassen danach trotz Bewitterungsschädigung keinen Bruch aufweisen.

Die in der vorliegenden Anmeldung beschriebenen Parameter wurden wie folgt bestimmt:

1. Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 82 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.% der Teilchen einen kleineren Durchmesser haben als der Durchmesser, der dem $d_{50}$-Wert entspricht. Ebenso haben dann 50 Gew.% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser), die sich aus der integralen Massenverteilung ergebenden $d_{10}$- und $d_{90}$-Werte herangezogen. Der $d_{10}$-bzw. $d_{90}$-Wert der integralen Massenverteilung ist dabei entsprechend dem $d_{50}$-Werte definiert mit dem Unterschied, daß sie auf 10 bzw. 90 Gew.% der Teilchen bezogen sind. Der Quotient

$$d_{90} - d_{10}/d_{50} = Q$$

stellt ein Maß für die Verteilungsbreite der Teilchengröße dar.

2. Die Kerbschlagzähigkeit $a_k$ in [kJ/m²] der Produkte gemäß Erfindung und von Vergleichsproben wurde nach DIN 53 453 an bei 250 °C gespritzten Normkleinstäben bei 23 °C gemessen. Die Werte sind in der Tabelle zusammmgefaßt.

3. Die multiaxiale Schlagbeanspruchung wurde mit Hilfe des Plastechontestes nach DIN 53443 an bei 250 °C gespritzten Rundscheiben bei 23 °C bestimmt.

4. Die Molgewichtsbestimmung der Polycarbonate erfolgt auf Grund der Messung der relativen Viskosität in 0,5 %iger Methylenchloridlösung bei 23 °C.

Zur Durchführung der in den Beispielen beschriebenen Versuche und von Vergleichsversuchen wurden die nachfolgend beschriebenen Produkte hergestellt.

1. Herstellung eines Elastomeren $b_1$

16 Teile Butylacrylat und 0,4 Teile Tricyclodecenylacrylat wurden in 150 Teilen Wasser unter Zusatz von 0,5 Teilen des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60 °C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.%. Dieser Latex wurde als Saat für die nachfolgende Polymerisation benutzt.

Zu einer Vorlage aus 2,5 Teilen des hergestellten Latex wurden nach Zugabe von 100 Teilen Wasser und 0,2 Teilen Kaliumpersulfat im Verlauf von 3 Stunden einerseits eine Mischung aus 98 Teilen Butylacrylat und 2 Teilen Tricyclodecenylacrylat und andererseits eine Lösung von 0,5 Teilen des Natriumsalzes einer $C_{12}$- bis $C_{18}$-Paraffinsulfonsäure in 50 Teilen Wasser bei 60 °C zulaufen gelassen. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel) des Latex wurde zu 465 nm ermittelt. Die Teilchengrößenverteilung war eng (Q = 0,2).

2. Herstellung eines Pfropfkautschuks, Komponente $b_1$ + $b_2$ mit 3-stufiger Pfropfhülle

125 Teile des erhaltenen Polybutylacrylat-Latex wurden mit 10 Teilen Styrol und 60 Teilen Wasser gemischt und unter Rühren nach Zusatz von weiteren 0,03 Teilen Kaliumpersulfat und 0,05 Teilen Lauroylperoxid 1 Stunde auf 65 °C erhitzt, wonach praktisch das gesamte Styrol verbraucht war. Nach Beendigung der ersten Stufe der Pfropfmischpolymerisation hatte das Pfropfmischpolymerisat einen Pfropfgrad von 17. Diese Pfropfmischpolymerisat-Dispersion wurde ohne weitere Zusatzstoffe mit 20 Teilen einer Mischung aus Styrol und Acrylnitril (Verhältnis 75 : 25) weitere 2 Stunden bis praktisch alle Monomeren verbraucht waren, polymerisiert. Der Pfropfgrad des Pfropfmischpolymerisats betrug danach 37. Schließlich wurden 20 Teile Methylmethacrylat hinzugefügt und 2 Stunden bis zur vollständigen Umsetzung der Monomeren bei den genannten Bedingungen polymerisiert, wobei in der 3. Verfahrenstufe ein Pfropfgrad von 50 resultierte. Das Verhältnis $b_1/b_2$ für die Komponente B, bezogen auf alle 3 Verfahrensstufen, war 1/1. Das erhaltene Pfropfmischpolymerisat wurde mittels Calciumchloridlösung bei 95 °C aus der Dispersion gefällt, mit Wasser gewaschen und im warmen Luftstrom getrocknet. Die mittlere Teilchengröße (Gewichtsmittel) wurde zu 485 nm ermittelt. Die Teilchengrößenverteilung war eng (Qotient Q = 0,29).

3. Herstellung eines Pfropfmischpolymerisates mit 2-stufiger Hülle (Vergleichsversuch)

150 Teile des erhaltenen Polybutylacrylat-Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65 °C erhitzt. Nach Beendigung der ersten Stufe der Pfropfmischpolymerisation hatte das Pfropfmischpolymerisat einen Pfropfgrad von 25. Diese Pfropfmischpolymerisatdispersion wurde ohne weitere Zusatzstoffe mit 20 Teilen einer Mischung aus Styrol und Acrylnitril (Verhältnis 75 : 25) weitere 3 Stunden polymerisiert. Nach Beendigung der Pfropfmischpolymerisation wurde das Produkt mittels Calciumchloridlösung bei 95 °C aus der Dispersion gefällt, mit Wasser gewaschen und im warmen Luftstrom getrocknet. Der Pfropfgrad des Pfropfmischpolymerisats betrug 35.

4. Als Komponente A) wurde ein Polycarbonat auf der Basis von 2,2-Bis-(4-hydroxyphenyl) propan mit einer relativen Viskosität von 1,30 [ml/g] (gemessen an einer 0,5 %igen Lösung in Methylenchlorid) eingesetzt.

Die Erfindung wird durch die nachfolgenden Beispiele und Vergleichsversuche näher erläutert. Die in den Beispielen und Vergleichsversuchen genannten Teile und Prozente beziehen sich, sofern nicht anders angegeben, auf das Gewicht.

Beispiele 1 bis 5 und Vergleichsversuche

Die in der Tabelle angegebenen Teile der Komponenten A) und $(b_1 + b_2)$ werden auf einem Mischextruder bei 260 °C aufgeschmolzen, gemischt und anschließend granuliert. Danach werden, jeweils bezogen auf 100 Teile Granulat, 0,3 Teile Ultramarinblau, 2 Teile eines üblichen Schmiermittels auf Basis eines Phthalsäureesters und 0,2 Teile eines sterisch gehinderten Phenols (Antioxydans) zugegeben, die Komponenten gemischt und schonend konfektioniert.

Aus den Mischungen wurden bei 250 °C mittels einer Spritzgußmaschine Prüfkörper hergestellt, an denen die in der Tabelle genannten Prüfungen durchgeführt wurden.

Tabelle

| Beispiele/ Vergleichs- versuche | Komp.A Teile | Komp.B Teile | Aufbau von B | | | | ak | Plastechontest |
|---|---|---|---|---|---|---|---|---|
| | | | $b_1$ | $b_2a_1$ | $b_2a_2$ | $b_2a_3$ | | |
| Vergl.Vers. | 60 | 40 | 100 | – | – | – | 20 | 6 |
| Vergl.Vers. | 60 | 40 | 60 | 20 | 20 | – | 25 | 13 |
| 1 | 60 | 40 | 60 | 10 | 20 | 10 | 37 | 15 |
| 2 | 60 | 40 | 60 | 3,3 | 6,7 | 30 | 45 | 19 |
| 3 | 80 | 20 | 60 | 3,3 | 6,7 | 30 | 40 | 25 |
| 4 | 60 | 40 | 50 | 10 | 20 | 20 | 48 | 18 |
| 5 | 80 | 20 | 50 | 10 | 20 | 20 | 53 | 47 |

**Patentansprüche**

1. Thermoplastische Formmasse, enthaltend
A) 10 bis 90 Gew.%, bezogen auf A) + B) mindestens eines Polycarbonates und
B) 90 bis 10 Gew.%, bezogen auf A) + B), wobei einander A) und B) auf 100 Gew.% ergänzen, mindestens eines Pfropfmischpolymerisates,
das gebildet wird aus
$b_1$) mindestens einem Elastomeren (Kautschuk) mit einer Einfriertemperatur unter 0 °C, einer Teilchengröße von 200 bis 700 nm ($d_{50}$-Wert) und einer Verteilung $Q = d_{90} - d_{10} / d_{50} < 0,5$ das 10 bis 80 Gew.%, bezogen auf B), ausmacht und das aufgebaut ist aus (Summe $b_1a_1 + b_1a_2 + b_1a_3 = 100$)

$b_1a_1$) 50 bis 99,9 Gew.%, bezogen auf $b_1$), mindestens eines Alkylacrylats mit 1 bis 8 Kohlenstoffatomen im Alkylrest

$b_1a_2$) Gegebenenfalls mindestens einem copolymerisierbaren ungesättigten Monomeren und

$b_1a_3$) 0,1 bis 5 Gew.%, bezogen auf $b_1$), eines copolymerisierbaren polyfunktionellen, vernetzenden Monomeren und

$b_2$) einer Pfropfhülle auf dieses Elastomere, die 90 bis 20 Gew.%, bezogen auf B), ausmacht, dadurch gekennzeichnet, daß die Pfropfhülle $b_2$) des Mischpolymerisats B dreistufig aufgebaut ist und einpolymerisiert enthält

als Pfropfmonomere der ersten Stufe

$b_2a_1$) 5 bis 40 Gew.%, bezogen auf $b_2$), mindestens eines monoethylenisch ungesättigten aromatischen Kohlenwasserstoffs mit bis zu 12 Kohlenstoffatomen,

als Pfropfmonomere der zweiten Stufe

$b_2a_2$) 15 bis 50 Gew.%, bezogen auf $b_2$), eines Gemisches aus mindestens einem monoethylenisch ungesättigten aromatischen Kohlenwasserstoff mit bis zu 12 Kohlenstoffatomen und — mindestens einem damit copolymerisierbaren ethylenisch ungesättigten Monomeren im Gewichtsverhältnis von 90 : 10 bis 60 : 40,

und als Pfropfmonomere der dritten Stufe

$b_2a_3$) 10 bis 80 Gew.%, bezogen auf $b_2$), eines Alkylmethacrylates oder eines Alkylacrylates mit 1 bis 8 C-Atomen im Alkylrest oder deren Mischungen, wobei das aus dem Elastomeren $b_1$) und der Pfropfhülle $b_2$) gebildete Pfropfmischpolymerisat eine mittlere Teilchengröße von 200 bis 700 nm ($d_{50}$-Wert der integralen Masseverteilung) aufweist.

2. Thermoplastische Formmasse gemäß Anspruch 1, bestehend aus den Komponenten A und B.

3. Thermoplastische Formmasse gemäß Anspruch 2 dadurch gekennzeichnet, daß das Pfropfmischpolymerisat B) aus 30 bis 70 Gew.% des Elastomeren $b_1$) und 70 bis 30 Gew.% der Pfropfhülle $b_2$) besteht, und daß die Pfropfhülle $b_2$) erhalten wird durch sukzessive Polymerisation der Monomeren der Sorten $b_2a_1$), $b_2a_2$) und $b_2a_3$) in drei Verfahrensschritten in der genannten Reihenfolge in Gegenwart des Elastomeren $b_1$), so daß an- und somit einpolymerisiert werden

im ersten Verfahrensschritt

10 bis 25 Gew.%, $b_2a_1$),

in zweiten Verfahrensschritt

20 bis 45 Gew.%, $b_2a_2$),

und im dritten Verfahrenschritt

25 bis 70 Gew.% $b_2a_3$), jeweils bezogen auf $b_2$).

4. Verwendung der Formmassen gemäß Anspruch 1 zur Herstellung von Formteilen.

5. Formteile aus Formmassen gemäß Anspruch 1.

## Claims

1. A thermoplastic molding material containing

A) from 10 to 90 % by weight, based on A) + B) where A) und B) sum to 100 % by weight, of one or more polycarbonates and

B) from 90 to 10 % by weight, based on A) + B) where A) und B) sum to 100 % by weight, of one or more graft copolymers which are composed of

$b_1$) one of more elastomers (rubbers) which have a glass transition temperature of less than 0 °C, a particle size of from 200 to 700 nm ($d_{50}$) value and a distribution $Q = d_{90} — d_{10} / d_{50} < 0.5$, account for from 10 to 80 % by weight, based on B), and consist of ($b_1a_1 + b_1a_2 + b_1a_3 = 100$)

$b_1a_1$) from 50 to 99.9 % by weight, based on $b_1$), of one or more alkyl acrylates where alkyl is of 1 to 8 carbon atoms,

$b_1a_2$) if required, one or more copolymerizable unsaturated monomers and

$b_1a_3$) from 0.1 to 5 % by weight, based on $b_1$), of a copolymerizable polyfunctional crosslinking monomer and

$b_2$) a grafted shell on this elastomer, which shell accounts for from 90 to 20 % by weight, based on B),

wherein the grafted shell $b_2$) of the copolymer B is produced in three stages and contains, as copolymerized units,

$b_2a_1$) from 5 to 40 % by weight, based on $b_2$), of one or more monoethylenically unsaturated atomatic hydrocarbons of not more than 12 carbon atoms as graft monomers of the first stage,

$b_2a_2$) from 15 to 50 % by weight, based on $b_2$), of a mixture of one or more monoethylenically unsaturated aromatic hydrocarbons of not more than 12 carbon atoms with one or more ethylenically unsaturated monomers which are copolymerizable with this, in a weight ratio of from 90 : 10 to 60 : 40, as graft monomers of the second stage, and

$b_2a_3$) from 10 to 80 % by weight, based on $b_2$), of an alkyl methacrylate or an alkyl acrylate where alkyl is of 1 to 8 carbon atoms, or a mixture of these,
as graft monomers of the third stage, the graft copolymer formed from the elastomer $b_1$) and the grafted shell $b_2$) having a mean particle size of from 200 to 700 nm ($d_{50}$ value of the integral mass distribution).

2. A thermoplastic molding material as claimed in claim 1, consisting of the components A) and B).

3. A thermoplastic molding material as claimed in claim 2, wherein the graft copolymer B) consists of from 30 to 70 % by weight of the elastomer $b_1$) and from 70 to 30 % by weight of the grafted shell $b_2$), and the grafted shell $b_2$) is obtained by successive polymerization of the monomers of types $b_2a_1$), $b_2a_2$) and $b_2a_3$) in three process steps in the stated sequence in the presence of the elastomer $b_1$), so that in the first process step, from 10 to 25 % by weight of $b_2a_1$), in the second process step, from 20 to 45 % by weight of $b_2a_2$), and in the third process step, from 25 to 70 % by weight of $b_2a_3$), based in each case on $b_2$), are grafted on and hence incorporated as copolymerized units.

4. Use of a molding material as claimed in claim 1 for the production of moldings.

5. Moldings obtained from a molding material as claimed in claim 1.

## Revendications

1. Matière à mouler thermoplastique, comprenant
   A) 10 à 90 % du poids de A) + B) d'au moins un polycarbonate et
   B) 90 à 10 % du poids A) + B) — A) et B) faisant ensemble 100 % en poids — d'au moins un copolymère de greffage, composé de
   $b_1$) au moins un élastomère (caoutchouc) avec une température de solidification inférieure à 0 °C, d'une granulométrie comprise entre 200 et 700 nm (valeur $d_{50}$) avec une répartition $Q = d_{90} — d_{10} / d_{50} < 0,5$, cet élastomère constituant 10 à 80 % en poids par rapport à B) et étant formé de
   $b_1a_1$) 50 à 99,9 % du poids de $b_1$) d'au moins un acrylate d'alkyle avec un radical alkyle en $C_1$ à $C_8$,
   $b_1a_2$) au moins un monomère non saturé copolymérisable éventuel et
   $b_1a_3$) 0,1 à 5 % du poids de $b_1$) d'un monomère polyfonctionnel réticulant copolymérisable, la somme $b_1a_1 + b_1a_2 + b_1a_3 = 100$, et
   $b_2$) une enveloppe de greffage, entourant cet élastomère et correspondant à 90 à 20 % du poids de B),
   caractérisée en ce que l'enveloppe de greffage $b_2$) du copolymère B est réalisée en trois stades (étapes) et contient sous une forme copolymérisée
   $b_2a_1$) en tant que monomères de greffage du premier stade 5 à 40 % du poids de $b_2$) d'au moins un hydrocarbure aromatique à insaturation mono-éthylénique avec jusqu'à 12 atomes de carbone,
   $b_2a_2$) en tant que monomères de greffage du deuxième stade 15 à 50 % du poids de $b_2$) d'un mélange d'au moins un hydrocarbure aromatique à insaturation mono-éthylénique avec jusqu'à 12 atomes de carbone et d'au moins un monomère à insaturation éthylénique, copolymérisable avec cet hydrocarbure, le rapport des proportions pondérales étant compris entre 90 : 10 et 60 : 40, et
   $b_2a_3$) en tant que monomères de greffage du troisième stade 10 à 80 % du poids de $b_2$) d'un acrylate ou d'un méthacrylate d'alkyle avec un radical alkyle en $C_1$ à $C_8$ ou d'un mélange de ceux-ci, le copolymère de greffage formé par l'élastomère $b_1$) et l'enveloppe de greffage $b_2$) possédant une granulométrie moyenne comprise entre 200 et 700 nm (valeur $d_{50}$ de la répartition intégrale des masses).

2. Matière à mouler thermoplastique suivant la revendication 1, composée des composants A et B.

3. Matière à mouler thermoplastique suivant la revendication 2, caractérisée en ce que le copolymère de greffage B) comprend entre 30 et 70 % en poids de l'élastomère $b_1$) et entre 70 et 30 % en poids de l'enveloppe de greffage $b_2$), l'enveloppe de greffage $b_2$) étant produite par des polymérisations successives en trois stades opératoires, dans l'ordre indiqué, des monomères $b_2a_1$), $b_2a_2$) et $b_2a_3$), en présence de l'élastomère $b_1$), ces opérations de polymérisation conduisant à la copolymérisation de 10 à 25 % en poids de $b_2a_1$) dans le premier stade, de 20 à 45 % en poids de $b_2a_2$) dans le deuxième stade et de 25 à 70 % en poids de $b_2a_3$) dans le troisième stade, ces pourcentages en poids se rapportant au composant $b_2$).

4. Utilisation de matières à mouler suivant la revendication 1 pour la production d'articles façonnés.

5. Articles façonnés, produits à l'aide de matières à mouler suivant la revendication 1.